# EUROPEAN PATENT APPLICATION

(11) **EP 1 407 920 A2**
(43) Date of publication of application: **14.04.2004**
(21) Application number: 03256375.1
(22) Date of filing: 09.10.2003
(51) Int. Cl.: B60N 2/08

(54) **Anchorage systems**

(30) Priority: 09.10.2002 GB 0223394
(71) Applicant: Koller Engineering Limited, Yeovil, Somerset BA20 2TJ (GB)
(72) Inventor: Koller, Max Arnold, Yeovil, Somerset BA20 2TJ (GB)
(74) Representative: Brown, Michael Stanley

(57) **Abstract**

An anchorage system includes:
a) a channel-section anchorage rail (10) that, in use, is fixed to the floor of a road vehicle, the side walls (12 and 13) of the channel section including inwardly directed lips (16 and 17) between which there is a gap,
b) a carriage (31) that is mounted on the rail (10),
c) locking formations (41, 41) mounted on the carriage (31) and movable between a locking condition in which they cannot pass through the gap between the inwardly directed lips (16, 17) and an unlocking condition in which they can pass through the gap between the inwardly directed lips (16, 17),
d) spring means (42) biasing the locking formations (40, 41) into the unlocking condition, and
e) operating means comprising a cam block (27) relative to which the carriage (31) is movable in one direction to move the locking formations (40, 41) against the action of the spring means (42) and in the opposite direction to allow the spring means (42) to move the locking formations (40, 41) into the unlocking condition.

## Description

### Field of the Invention

This invention relates to anchorage systems for fitment in motor vehicles and is particularly concerned with anchorage systems that comprise a channel-section rail that, in use, is fixed to the floor of a road vehicle and a carriage that is mounted on the rail.

There are a number of anchorage systems currently in use and it is an object of the present invention to provide an anchorage system that offers advantages as compared to the systems currently in use.

### Summary of the Invention

According to the present invention there is provided an anchorage system that includes:
a) a channel-section anchorage rail that, in use, is fixed to the floor of a road vehicle, the side walls of the channel section including inwardly directed lips between which there is a gap,
b) a carriage that, in use, is mounted on the rail,
c) locking means mounted on the carriage and including formations that are movable between a locking condition in which they cannot pass through the gap between the inwardly directed lips and an unlocking condition in which they can pass through the gap between the inwardly directed lips,
d) spring means biasing the locking formations into the unlocking condition, and
e) operating means comprising a cam block relative to which the carriage is movable in one direction to move the locking formations against the action of the spring means and is movable in the opposite direction to allow the spring means to move the locking formations into the unlocking condition.

The carriage is preferably mounted within a channel-section outer tube within which the locking formations and the spring means are located. The top of the outer tube is preferably formed with a plurality of fixing holes for attachment of the outer tube to a seat, and the operating means preferably includes a shaft which projects through an opening in the outer tube and is so arranged that rotation of the shaft serves to effect longitudinal movement of the carriage relative to the cam block.

The cam block preferably includes a plurality of recesses that have inclined sides and the recesses preferably receive rotatable elements mounted on the carriage, with the arrangement such that longitudinal movement of the carriage in the one direction serves to cause displacement of the rotatable elements (and hence the carriage) in a direction away from the top of the outer tube.

The outer tube preferably carries a spring-loaded plunger having a disc-shaped head arranged to engage in opposed arcuate recesses formed in the edges of the inwardly directed lips of the anchorage rail.

### Brief Description of the Drawings

Figure 1 is a partly broken away perspective view of a section of the upper component of the anchorage system of the present position showing the parts thereof in the locking condition,
Figure 2 is a partly sectioned schematic view of the section of the component shown in Figure 1,
Figure 3 is a sectional view showing the lower portion of the component of Figure 1 in engagement with an anchorage rail that forms the lower component of the anchorage system of the present invention,
Figure 4 is a view corresponding to Figure 1 but showing the parts in the unlocking condition,
Figure 5 is a view corresponding to Figure 2 but showing the parts in the unlocking condition,
Figure 6 is a side view of an end of the upper component of the anchorage system,
Figure 7 is an underneath plan of the parts shown in Figure 6, and
Figure 8 is a plan view of the anchorage system.

### Description of the Preferred Embodiment

The anchorage system shown in the drawings includes an extruded aluminium anchorage rail 10 that is fixed to the floor of a motor vehicle. The method of fixing the anchorage rail 10 to the floor may include a strengthening rail (not shown) and may be as described in British Patent Specification No. 2 387 151, to which reference should be made.

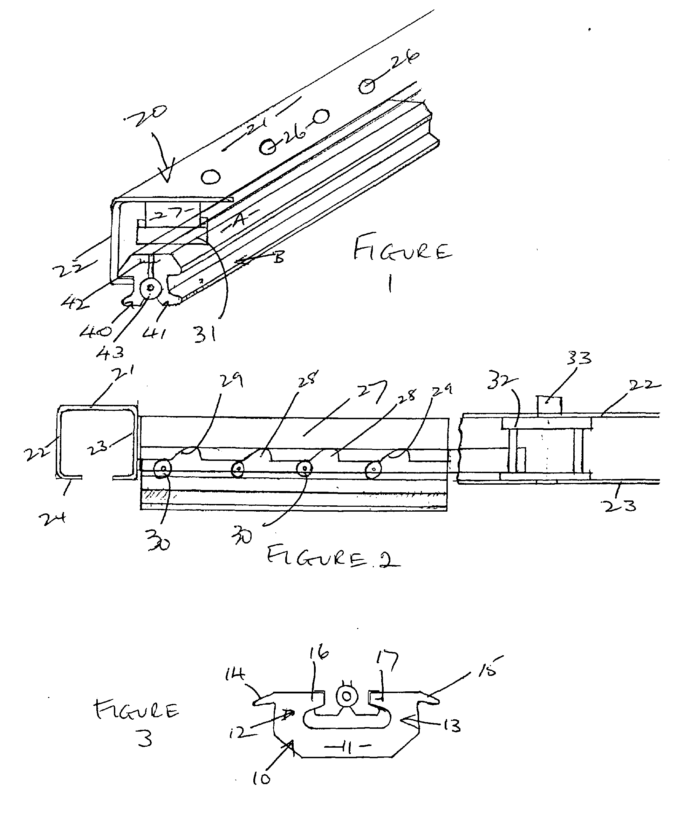

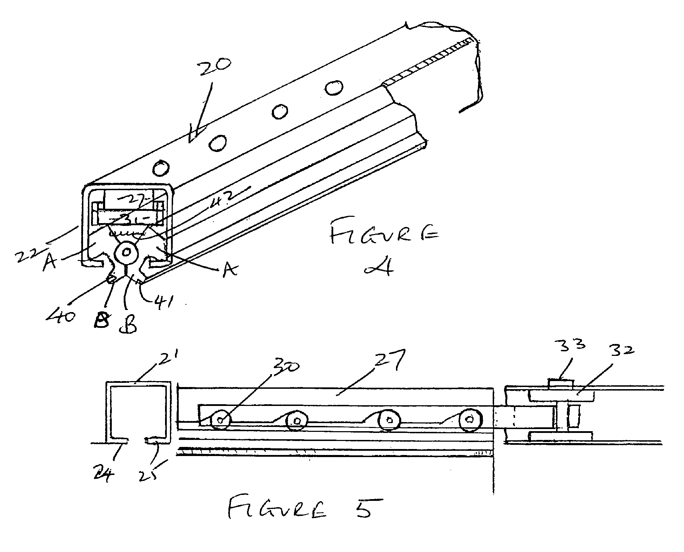

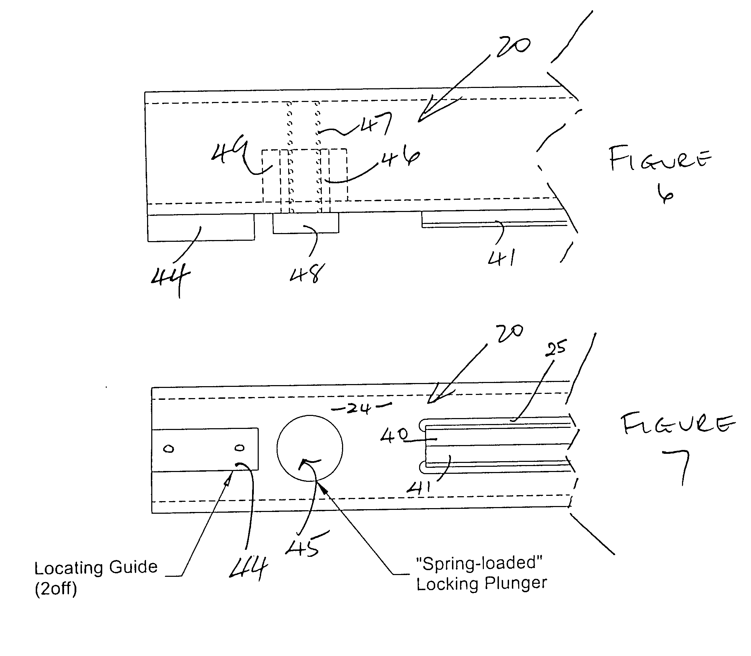

The anchorage rail 10, which is shown in Figure 3, is of channel section and has a base 11 and side walls 12 and 13. The side walls 12 and 13 terminate at their upper ends in outwardly directed flanges 14 and 15 respectively and in inwardly directed lips 16 and 17. There is a gap between the ends of the inwardly directed lips 16 and 17 and the edges of the inwardly directed lips 16 and 17 are formed with opposed pairs of arcuate recesses.

The other part of the anchorage system comprises a channel-section outer steel tube 20, the tube 20 having a top 21, side walls 22 and 23 and a base 24 that is formed with a pair of axially extending elongated slots 25 (Figure 7) that terminate short of the ends of the tube 20. The top 21 of the tube 20 is formed with a plurality of spaced securing holes 26 for attachment of the steel tube 20 to a seat (not shown) within the vehicle.

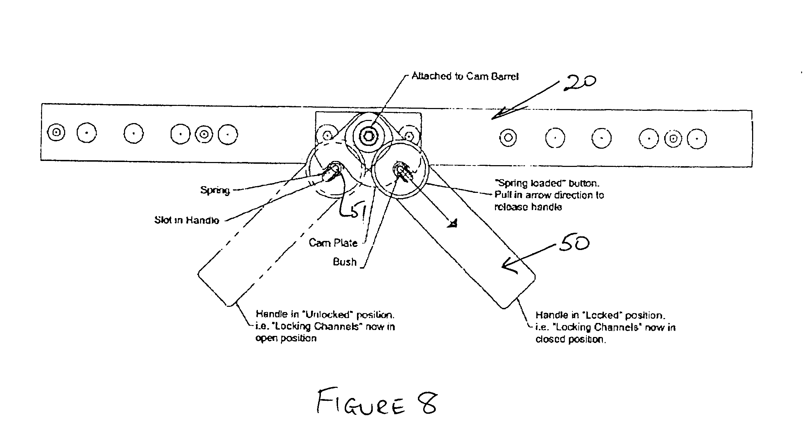

A cam block 27 is fixed to the inner surface of the top 21 of the steel tube 20 and includes a plurality of downwardly facing recesses 28 that have inclined sides 29. The recesses 28 receive rotatable elements 30 mounted on a carriage 31 which is movable longitudinally of the outer tube 20 such that, when the carriage 31 is moved to the left (as shown in the drawings) from the position shown in Figure 5 into the position shown in Figure 2, the carriage 31 is urged downwardly away from the top 21 of the steel tube 20. Such movement of the carriage 31 is effected by means of a cam barrel 32 that is connected to one end of the carriage 31 and includes an operating shaft 33 that projects through an opening in the top 21 of the steel tube 20.

Locking formations 40 and 41 are disposed beneath the carriage 31 and are acted upon by a pair of return springs 42 that are located at the upper ends of the locking formations 40 and 41 and serve to urge the upper ends of the locking formations 40 and 41 away from each other. The locking formations 40 and 41 are mounted on a pivot shaft 43 and each locking formation 40, 41 includes an upper part A and a lower part B shaped as shown in the drawings. Each upper part A thus includes an outwardly projecting flange and has an inner surface facing towards the other locking formation. Each lower part B also includes an outwardly projecting flange and has an inner surface facing towards the other locking formation.

When the locking formations 40 and 41 are in their unlocking condition, as shown in Figures 4 and 5, the return springs 42 serve to bias the inner surfaces of the lower parts B of the locking formations 40 and 41 into abutting engagement with one another and the outer ends of the outwardly projecting flanges of the upper parts A of the locking formations 40 and 41 rest on the borders of the slots 25 in the base 24 of the steel tube 20. The distance between the outer edges of the outwardly projecting flanges of the lower parts B of the locking formations 40 and 41 is then such that the lower parts B of the locking formations 40 and 41 can pass through the gap between the inwardly directed lips 16 and 17 of the anchorage rail 10.

When the cam barrel 32 is rotated to effect longitudinal movement of the carriage 31 and hence movement of the carriage 31 downwardly away from the top 21 of the steel tube 20, the pressure applied by the carriage 31 to the upper parts A of the locking formations 40 and 41 will cause the locking formations 40 and 41 to pivot about their points of engagement with the borders of the slots 25 in the base 24 of the steel tube 20. Such pivoting movement will continue until the inner surfaces of the upper parts A of the locking formations 40 and 41 are in engagement with one another, as shown in Figure 1. In this condition, the distance between the outer edges of the outwardly projecting flanges of the lower parts B of the locking formations 40 and 41 is such that the lower parts B of the locking formations 40 and 41 cannot pass through the gap between the inwardly directed lips 16 and 17 of the anchorage rail 10.

Effective locking together of the two parts of the anchorage system can thus be effected by turning the operating shaft 33 of the cam barrel 32 in one direction, while unlocking is effected by turning the operating shaft 33 of the cam barrel 32 in the opposite direction. The means for effecting turning of the operating shaft 33 is shown in Figure 8 and comprises a handle 50 movable from the "locked" condition shown in full lines into the "unlocked" condition shown in broken lines. The handle 50 is held in either of its positions by means of a spring-loaded catch or button 51 that is arranged to engage in a selected slot in a cam plate and is movable against the action of its spring-loading to permit movement of the handle 50.

During installation of the anchorage system, the anchorage rail 10 is secured to the floor of the vehicle and the upper part of the anchorage system is lowered onto the anchorage rail 10 with the locking formations 40 and 41 in the positions shown in Figure 5 so that the lower parts B of the locking formations 40 and 41 can pass through the gap between the inwardly directed lips 16 and 17 of the anchorage rail 10.

Rotation of the cam barrel 32 by means of the operating shaft 33 will then produce longitudinal movement of the carriage 31, which will then be caused to move downwardly to produce pivotal movement of the locking formations 40 and 41 from the positions shown in Figure 4 into the position shown in Figures 1 and 3, in which the locking formations 40 and 41 can no longer pass through the gap between the inwardly directed lips 16 and 17 of the anchorage rail 10.

The outer tube 20 is provided at each of its ends with a downwardly projecting rectangular locating guide block 44 (Figures 6 and 7) that is so dimensioned that it is a sliding fit in the gap between the inwardly directed lips 16 and 17 of the anchorage rail 10. A spring-loaded locking plunger 45 is provided at one end of the outer tube 20. The spring-loaded plunger 45 includes a cylindrical stem 46 within which a spring 47 is contained and a disc-shaped head 48. The cylindrical stem 46 is contained within a fixed cylindrical sleeve 49 and the plunger 45 is urged downwardly by the spring 47 so that the disc-shaped head 48 can engage in opposed arcuate recesses (not shown) formed in the edges of the inwardly directed lips 16 and 17 of the anchorage rail 10.

Thus, when the upper part of the anchorage system is engaged with the anchorage rail 10, the head 48 of the plunger 45 will be urged by the associated spring 47 into engagement with the upwardly present surfaces of the inwardly directed lips 16 and 17 and the upper part of the anchorage system will be moved longitudinally relative to the anchorage rail 10 until the disc-shaped head 48 of the plunger 45 is aligned with a pair of opposed arcuate recesses formed in the edges of the lips 16 and 17 of the anchorage rail 10. The plunger 45 will then move downwardly to engage in the recesses and hold the upper part of the anchorage system positively against longitudinal movement relative to the anchorage rail 10.

## Claims

1. An anchorage system that includes:
a) a channel-section anchorage rail (10) that, in use, is fixed to the floor of a road vehicle, the side walls (12 and 13) of the channel section including inwardly directed lips (16 and 17) between which there is a gap,
b) a carriage (31) that, in use, is mounted on the rail (10),
c) locking means (40, 41, 42, 43) mounted on the carriage (31) and including formations (40, 41) that are movable between a locking condition in which they cannot pass through the gap between the inwardly directed lips (16, 17) and an unlocking condition in which they can pass through the gap between the inwardly directed lips (16, 17),
d) spring means (42) biasing the locking formations (40, 41) into the unlocking condition, and
e) operating means comprising a cam block (27) relative to which the carriage (31) is movable in one direction to move the locking formations (40, 41) against the action of the spring means (42) and in the opposite direction to allow the spring means (42) to move the locking formations (40, 41) into the unlocking condition.

2. An anchorage system as claimed in Claim 1, in which the carriage (31) is mounted within a channel-section outer tube (20) within which the locking formations (40, 41) and the spring means (42) are located.

3. An anchorage system as claimed in Claim 2, in which the top of the outer tube (20) is formed with a plurality of fixing holes for attachment of the outer tube to a seat, and the operating means includes a shaft (33) which projects through an opening in the outer tube (20) and is so arranged that rotation of the shaft (33) serves to effect longitudinal movement of the carriage (31) relative to the cam block (27).

4. An anchorage system as claimed in Claim 3, in which the cam block (27) includes a plurality of recesses (28) that have inclined sides (29) and the recesses (28) receive rotatable elements (30) mounted on the carriage (31), with the arrangement such that longitudinal movement of the carriage (31) in the one direction serves to cause displacement of the rotatable elements (30) [and hence the carriage (31)] in a direction away from the top of the outer tube (20).

5. An anchorage system as claimed in any one of Claims 2 to 4, in which the outer tube (20) carries a spring-loaded plunger (45) having a disc-shaped head (48) arranged to engage in opposed arcuate recesses formed in the edges of the inwardly directed lips (16, 17) of the anchorage rail (10).
